# EUROPÄISCHE PATENTANMELDUNG

(11) **EP 3 613 863 A1**
(43) Veröffentlichungstag der Anmeldung: **26.02.2020**
(21) Anmeldenummer: 18189873.5
(22) Anmeldetag: 21.08.2018
(51) Int. Cl.: C22B 3/00

(54) **VERFAHREN ZUM AUFSCHLUSS EINES RUTHENIUM UMFASSENDEN GEMISCHS VON FESTSTOFFPARTIKELN**

(71) Anmelder: Heraeus Deutschland GmbH & Co KG, 63450 Hanau (DE)
(72) Erfinder: STETTNER, Martin, 63450 Hanau (DE); GÜNTHER, Magdalena, 63450 Hanau (DE); FUCHS ALAMEDA, Stefanie, 63450 Hanau (DE); KRÖCKEL, Sophia, 63450 Hanau (DE)
(74) Vertreter: Heraeus IP

(57) **Zusammenfassung**

Verfahren zum Aufschluss eines in Form von Feststoffpartikeln vorliegenden Gemischs bestehend aus:
(A) 0,05 bis 99 Gew.-% metallischen Rutheniums,
(B) 0 bis 50 Gew.-% mindestens eines von Ruthenium verschiedenen, in Elementform vorliegenden Elements ausgewählt aus der Gruppe der Elemente der Ordnungszahlen 13, 21-30, 39-42, 45-52 und 72-83,
(C) 0 bis 99 Gew.-% Rutheniumoxid,
(D) 0 bis 70 Gew.-% mindestens eines von Rutheniumoxid verschiedenen festen Elementoxids,
(E) 0 bis 30 Gew.-% mindestens einer von (A) bis (D) verschiedenen anorganischen Substanz, und
(F) 0 bis 3 Gew.-% mindestens einer organischen Substanz,
wobei die Summe der Gew.-% der Bestandteile (A) bis (F) 100 Gew.-% und der Rutheniumgehalt des Gemischs 2 bis 99 Gew.-% beträgt, und
wobei das Verfahren die Schritte umfasst:
(1) gegebenenfalls Vermengen des Gemischs mit Alkalicarbonat unter Bildung eines Gemenges,
(2) alkalisch oxidierendes Aufschließen des Gemischs oder des im optionalen Schritt (1) gebildeten Gemenges in geschmolzenem Kaliumhydroxid unter Verwendung von Luft als Oxidationsmittel und ohne Verwendung von Nitrat, und
(3) Abkühlen des in Schritt (2) gebildeten Aufschlussmaterials auf eine Temperatur unterhalb seiner Erstarrungstemperatur.

## Beschreibung

Die vorliegende Erfindung betrifft ein Verfahren zum Aufschluss eines Ruthenium umfassenden Gemischs von Feststoffpartikeln. Ziel des Verfahrens ist der möglichst vollständige Aufschluss des Rutheniums und die Gewinnung einer wässrigen Lösung, die eine weitere Aufreinigung und Gewinnung von Ruthenium oder Rutheniumverbindungen erlaubt.

Die Erfindung betrifft ein Verfahren zum Aufschluss eines in Form von Feststoffpartikeln vorliegenden Gemischs bestehend aus:
(A) 0,05 bis 99 Gew.-% metallischen Rutheniums,
(B) 0 bis 50 Gew.-% mindestens eines von Ruthenium verschiedenen, in Elementform vorliegenden Elements ausgewählt aus der Gruppe der Elemente der Ordnungszahlen 13, 21-30, 39-42, 45-52 und 72-83,
(C) 0 bis 99 Gew.-% Rutheniumoxid,
(D) 0 bis 70 Gew.-% mindestens eines von Rutheniumoxid verschiedenen festen Elementoxids,
(E) 0 bis 30 Gew.-% mindestens einer von (A) bis (D) verschiedenen anorganischen Substanz, und
(F) 0 bis 3 Gew.-% mindestens einer organischen Substanz,
   wobei die Summe der Gew.-% der Bestandteile (A) bis (F) 100 Gew.-% und der Rutheniumgehalt des Gemischs 2 bis 99 Gew.-% beträgt.

Der Rutheniumgehalt des Gemischs kann dabei den Bestandteilen (A) plus (C) plus (E) oder (A) plus (C) oder (A) plus (E) entstammen.

Das im erfindungsgemäßen Verfahren aufzuschließende, in Form von Feststoffpartikeln vorliegende Gemisch kann verschiedenen Quellen entstammen. Es kann sich beispielsweise um ein Erzkonzentrat oder ein Gemisch mehrerer verschiedener Erzkonzentrate aus der Erzaufbereitung und/oder um einen Rückstand oder ein Gemisch mehrerer verschiedener jeweils Ruthenium enthaltender Rückstände aus der Edelmetallaufbereitung handeln.

Das metallische Ruthenium des Bestandteils (A) und/oder das mindestens eine von Ruthenium verschiedene, in Elementform vorliegende aus der Gruppe der Elemente der Ordnungszahlen 13, 21-30, 39-42, 45-52 und 72-83 ausgewählte Element kann/können als Legierungsbestandteil vorliegen.

Bei dem oder den festen Elementoxiden der Komponente (D) handelt es sich insbesondere um ein oder mehrere Oxide der Elemente der Komponente (B), Alkalimetalloxide und/oder Erdalkalimetalloxide. Um Missverständnisse auszuschließen, Peroxide oder Superoxide dieser Elemente sind ausgeschlossen. Die Elemente der Elementoxide der Komponente (D) können im Allgemeinen Oxidationsstufen im Bereich von +1 bis +4 aufweisen.

Die mindestens eine von den Komponenten (A) bis (D) verschiedene anorganische Substanz der Komponente (E) umfasst insbesondere weder (i) deutlich sauer reagierende Substanzen wie beispielsweise Säuren, saure Salze, Säureanhydride wie beispielsweise Phosphorpentoxid, oder dergleichen, noch (ii) mittels Luftsauerstoff unter den Aufschlussbedingungen des nacherwähnten Verfahrensschritts (1) unter Feuererscheinung oder gar Explosion oxidierbare Substanzen. Die mindestens eine von den Komponenten (A) bis (D) verschiedene anorganische Substanz der Komponente (E) kann insbesondere ausgewählt sein aus der Gruppe bestehend aus (i) Siliziumdioxid, (ii) aus gegebenenfalls als Komplex vorliegenden Kationen und aus der aus Silikaten, Sulfiden, Phosphiden, Sulfiten, Phosphiten, Sulfaten, Phosphaten, Arsenaten, Antimonaten, Selenaten und Metallaten bestehenden Gruppe ausgewählten Anionen gebildeten Salzen, (iii) von (i) und (ii) verschiedenen Oxo-, Schwefel- und/oder Phosphorverbindungen eines oder mehrerer Metalle der Ordnungszahlen 13, 21-30, 39-50, 72-83 und (iv) Kohlenstoff, beispielsweise Russ oder Graphit. Es handelt sich bei den anorganischen Substanzen der Komponente (E) im Wesentlichen um Feststoffe, d.h. die Komponente (E) besteht zu 95 bis 100 Gew.-%, bevorzugt zu 99 bis 100 Gew.-%, insbesondere vollständig aus Feststoffen.

Bevorzugt umfasst das im erfindungsgemäßen Verfahren aufzuschließende Gemisch keine Komponente (F). Es kann jedoch sein, dass es > 0 bis 3 Gew.-% Komponente (F) enthält, dann jedoch im allgemeinen technisch bedingt und insofern unvermeidbar.

Visuell betrachtet ist das im erfindungsgemäßen Verfahren aufzuschließende Gemisch praktisch homogen, nicht zuletzt als Folge der geringen Teilchengrößen der das Gemisch ausmachenden Feststoffpartikel.

Die absoluten Teilchengrößen der Feststoffpartikel können im Wesentlichen im Mikrometerbereich von beispielsweise bis zu 500 µm liegen, Die einzelnen oder einzelne Feststoffpartikel können dabei eine oder mehrere der Komponenten (A) bis (F) umfassen.

In einer Ausführungsform zeichnet sich das im erfindungsgemäßen Verfahren aufzuschließende Gemisch durch eine Teilchengröße D10 im Bereich von 0,5 bis 1 µm und eine Teilchengröße D50 im Bereich von 2 bis 10 µm der es ausmachenden Feststoffpartikel aus.

Die dem Fachmann bekannten Teilchengrößen D10 und D50 können mittels Laserbeugung bestimmt werden, beispielsweise mittels eines entsprechenden Teilchengrößenmessgeräts, beispielsweise mit einem Mastersizer 3000 von Malvern Instruments.

Aus EP 2 090 669 A2, EP 2 236 633 A1 und EP 2 348 137 A1 ist jeweils ein alkalisch oxidierender Aufschluss Ruthenium-haltiger Feststoffgemische in einer Alkalinitrat/KaliumhydroxidSchmelze bekannt.

Die Anmelderin konnte nunmehr für sie selber überraschend feststellen, dass ein alkalisch oxidierender Aufschluss Ruthenium-haltiger Feststoffgemische in geschmolzenem Kaliumhydroxid auch ohne Anwesenheit von Nitrat gelingt. Vorteilhaft ist dabei nicht nur die Einsparung von vergleichsweise teurem Nitrat. Vielmehr ergeben sich auch die in folgender nicht erschöpfender Liste dargestellten Vorteile:
- Bessere Auslastung von Reaktor oder Reaktionsbehältnis, in dem die alkalisch oxidierende Schmelze stattfindet, aufgrund Wegfall des sonst durch Nitrat beanspruchten Reaktorvolumens.
- Kein Nitratabwasser bei der weiteren Aufarbeitung des Aufschlussmaterials bzw. keine Notwendigkeit einer Auswaschung von NOx-Abgas aus einer letzteres mit sich bringenden Nitratverkochung.
- Vereinfachte weitere Edelmetallraffination, falls das rutheniumhaltige Feststoffpartikel-Ausgangsmaterial weitere Edelmetalle wie Platin und/oder Iridium enthält.

Das erfindungsgemäße Verfahren umfasst die Schritte:
(1) gegebenenfalls Vermengen besagten Gemischs mit Alkalicarbonat unter Bildung eines Gemenges,
(2) alkalisch oxidierendes Aufschließen des Gemischs respektive des im optionalen Schritt (1) gebildeten Gemenges in geschmolzenem Kaliumhydroxid unter Verwendung von Luft als Oxidationsmittel und ohne Verwendung von Nitrat, und
(3) Abkühlen des in Schritt (2) gebildeten Aufschlussmaterials auf eine Temperatur unterhalb seiner Erstarrungstemperatur.

In einer Ausführungsform umfasst das erfindungsgemäße Verfahren demnach die Schritte:
(1) Vermengen besagten Gemischs mit Alkalicarbonat unter Bildung eines Gemenges,
(2) alkalisch oxidierendes Aufschließen des gebildeten Gemenges in geschmolzenem Kaliumhydroxid unter Verwendung von Luft als Oxidationsmittel und ohne Verwendung von Nitrat, und
(3) Abkühlen des in Schritt (2) gebildeten Aufschlussmaterials auf eine Temperatur unterhalb seiner Erstarrungstemperatur.

In einer anderen Ausführungsform umfasst das erfindungsgemäße Verfahren die Schritte:
(2) alkalisch oxidierendes Aufschließen besagten Gemischs in geschmolzenem Kaliumhydroxid unter Verwendung von Luft als Oxidationsmittel und ohne Verwendung von Nitrat, und
(3) Abkühlen des in Schritt (2) gebildeten Aufschlussmaterials auf eine Temperatur unterhalb seiner Erstarrungstemperatur.

Hierin wird zwischen dem Gemisch, genauer gesagt, dem aus den Bestandteilen (A) bis (F) bestehenden aufzuschließenden Gemisch, und, sofern der optionale Schritt (1) verwirklicht wird, dem in Schritt (1) durch Vermengen besagten Gemischs mit Alkalicarbonat gebildeten Gemenge unterschieden.

Verfahrensschritt (1) ist optional, die Verfahrensschritte (2) und (3) hingegen finden zwingend statt.

Im optionalen Schritt (1) des erfindungsgemäßen Verfahrens kann durch Vermengen des Gemischs mit Alkalicarbonat ein Gemenge aus Gemisch und Alkalicarbonat gebildet werden, beispielsweise in einem Gewichtsverhältnis von 1 Gewichtsteil Gemisch : 0,05 bis 0,5 Gewichtsteilen Alkalicarbonat. Das Alkalicarbonat kann in dem Gemisch angepasster Teilchengröße, beispielsweise in Pulverform verwendet werden. Als Alkalicarbonat kann Natriumcarbonat und/oder Kaliumcarbonat verwendet werden; bevorzugt wird Natriumcarbonat verwendet. Für den Fachmann bedarf es keiner näheren Erläuterung, dass auch das Gemenge visuell betrachtet praktisch homogen ist, nicht zuletzt als Folge der geringen Teilchengrößen der das Gemenge ausmachenden Feststoffpartikel.

Die Durchführung des an sich optionalen Schrittes (1) hat sich als zweckmäßig erwiesen speziell bei Durchführung des Verfahrens im technischen Maßstab, also beispielsweise bei Ansatzgrößen von 20 und mehr kg, beispielsweise 20 bis 1000 kg aufzuschließenden Gemischs.

In Schritt (2) wird das Gemisch oder, falls der an sich optionale Schritt (1) verwirklicht wurde, das Gemenge in geschmolzenem Kaliumhydroxid unter Verwendung von Luft als Oxidationsmittel und ohne Verwendung von Nitrat alkalisch oxidierend aufgeschlossen.

Neben Luft bzw. dem darin enthaltenen Sauerstoff als Oxidationsmittel wird in Schritt (2) kein Nitrat verwendet. Bevorzugt wird neben dem Oxidationsmittel Luft auch kein von Nitrat verschiedenes Oxidationsmittel verwendet.

Das in Schritt (2) des erfindungsgemäßen Verfahrens zur Anwendung kommende Gewichtsverhältnis von aufzuschließendem Gemisch und Kaliumhydroxid kann beispielsweise 1 Gewichtsteil Gemisch : 2 bis 5 Gewichtsteilen geschmolzenem Kaliumhydroxid betragen; dieses Gewichtsverhältnis von aufzuschließendem Gemisch und Kaliumhydroxid gilt auch beim Arbeiten mit einem gemäß Schritt (1) gebildeten, das Gemisch umfassenden Gemenge.

Bevorzugt werden in Schritt (2) des erfindungsgemäßen Verfahrens neben dem aufzuschließenden Gemisch respektive dem Gemenge (aus aufzuschließendem Gemisch und Alkalicarbonat), Kaliumhydroxid und Luft keine weiteren Substanzen verwendet.

Naturgemäß umfasst Schritt (2) des erfindungsgemäßen Verfahrens das Inkontaktbringen des Gemischs respektive des Gemenges mit geschmolzenem Kaliumhydroxid. Bevorzugt geschieht das Inkontaktbringen durch Zugabe des Gemischs respektive des Gemenges in eine zuvor hergestellte Kaliumhydroxidschmelze. Die Kaliumhydroxidschmelze kann während der Zugabe des Gemischs respektive des Gemenges eine Temperatur beispielsweise im Bereich von 400 bis 800 °C oder sogar 500 bis 800 °C aufweisen. Die Zugabe zur Kaliumhydroxidschmelze kann während eines Zeitraumes von beispielsweise bis zu 2 bis 5 Stunden erfolgen, kontinuierlich oder in mehreren Portionen. Die Zugabegeschwindigkeit, genauer gesagt, die durchschnittliche Zugabegeschwindigkeit kann beispielsweise 0,04 bis 0,25 kg des Gemischs respektive des Gemenges pro Stunde und pro kg geschmolzenen Kaliumhydroxids betragen. Nach beendeter Zugabe kann das entstandene geschmolzene Material zweckmäßigerweise weiter durchmischt, insbesondere weiter gerührt werden, beispielsweise bei einer Temperatur im Bereich von 500 bis 800 °C oder sogar 600 bis 800 °C. Dazu kann es notwendig sein, die Temperatur gegenüber der Temperatur während der Zugabe zur Kaliumhydroxidschmelze entsprechend zu erhöhen. Das weitere Durchmischen kann beispielsweise einen Zeitraum von 1 bis 5 Stunden umfassen.

Am Ende von Schritt (2) erhält man ein Aufschlussmaterial in Form einer Schmelze, die Ruthenat (RuO₄²⁻) enthält.

Nach Beendigung von Schritt (2) wird das gebildete Aufschlussmaterial im sich anschließenden Schritt (3) auf eine Temperatur unterhalb der Erstarrungstemperatur abgekühlt, beispielsweise auf eine Temperatur im Bereich von 10 bis 70 °C. Es kann zweckmäßig sein, das Aufschlussmaterial noch als Schmelze in ein oder mehrere Behältnisse zu verbringen, in dem/denen ein gegebenenfalls nachfolgender Verfahrensschritt (4) stattfindet, und das Abkühlen darin erfolgen zu lassen. Der Abkühlvorgang erfolgt üblicherweise passiv ohne unterstützende Kühlung.

Ein zweckmäßiger Verfahrensschritt (4) kann insbesondere das Lösen des nach Beendigung von Schritt (3) abgekühlten und erstarrten Aufschlussmaterials in Wasser umfassen oder daraus bestehen. Zweckmäßig kann dabei beispielsweise so vorgegangen werden, dass man das Aufschlussmaterial in Wasser aufnimmt oder Wasser zum Aufschlussmaterial gibt. Beispielsweise kann dabei ein im Bereich von 1 : 1-5 liegendes Gewichtsverhältnis von Aufschlussmaterial : Wasser zur Anwendung kommen. Zweckmäßigerweise wird das Aufschlussmaterial in der wässrigen Phase suspendiert, beispielsweise durch Rühren.

Nach Beendigung von Schritt (4) kann sich bei Bedarf ein Schritt (5) des Abtrennens eventueller wasserunlöslicher Bestandteile des Aufschlussmaterials aus der wässrigen Lösung anschließen. Sollte also die in Schritt (4) erhaltene wässrige Lösung geringe Anteile solcher wasserunlöslicher Bestandteile enthalten, beispielsweise in einer auf das Aufschlussmaterial bezogenen Größenordnung von bis zu 10 Gew.-%, so können diese Bestandteile in diesem optionalen Verfahrensschritt (5) abgetrennt werden. Dabei können übliche dem Fachmann bekannte Fest-Flüssig-Trennverfahren eingesetzt werden, beispielsweise Dekantieren, Abhebern, Abfiltrieren oder geeignete Kombinationen solcher Trennverfahren.

Die in Schritt (4) respektive (5) erhaltene wässrige Lösung enthält gelöstes Ruthenat (RuO₄²⁻) und sie kann nach üblichen dem Fachmann bekannten Methoden, beispielsweise in den vorerwähnten EP 2 090 669 A2, EP 2 236 633 A1 und EP 2 348 137 A1 offenbarten Methoden, weiterverarbeitet werden. Beispielsweise kann die wässrige Lösung einer Behandlung mit einem geeigneten Reduktionsmittel beispielsweise ausgewählt aus der Gruppe bestehend aus Glucose, primären wasserlöslichen Alkoholen und sekundären wasserlöslichen Alkoholen unterworfen werden, um RuO₂ aus der wässrigen Lösung auszufällen.

Das erfindungsgemäße Verfahren zeichnet sich aus durch eine mindestens zufriedenstellende bis ausgezeichnete Rutheniumaktivierung (Rutheniumaufschlussrate). Beispielsweise liegt die Wiederfindungsrate des Rutheniums als Ruthenat in der wässrigen Lösung bei bis zu >99 %, bezogen auf das im in Schritt (2) eingesetzten Gemisch respektive Gemenge enthaltene Ruthenium. Mit anderen Worten, das erfindungsgemäße Verfahren erlaubt einen bis zu vollständigen Aufschluss von Ruthenium in Gemischen (respektive Gemengen) der vorerwähnten Art im Hinblick auf die Überführung darin enthaltenen Rutheniums in wasserlösliches Ruthenat.

### Beispiele

### Beispiel 1:

In einem zur Atmosphäre hin offenen Schmelztiegel wurden 400 kg Kaliumhydroxid vorgelegt und bei 550 °C aufgeschmolzen. Unter Rühren wurden über einen Zeitraum von 3,5 Stunden 130 kg eines Erzkonzentrats in Form eines Gemischs aus Feststoffpartikeln (D10 = 0,47 µm, D50 = 8,55 µm; Zusammensetzung gemäß Röntgenfluoreszenzanalyse (RFA), jeweils in Gew.-%: 6% Ru, 26% Pt, 12% Pd, 4% Rh, 1% Ir, 3% Se, 3% Fe) zugegeben. Danach wurde die Temperatur auf 620 °C erhöht und unter fortwährendem Rühren über einen Zeitraum von 5 Stunden gehalten. Anschließend wurde die Schmelze in Schmelzwannen ausgegossen. Nach dem Abkühlen auf 20 °C wurde die erstarrte Schmelze mit insgesamt 600 l Wasser versetzt und 5 Stunden aufsuspendiert. Die erhaltene wässrige Suspension wurde absetzen gelassen und die dabei erhaltene überstehende wässrige Lösung wurde abdekantiert und analysiert.

Die Wiederfindungsrate für Ruthenium betrug 61 % (errechnet aus dem mittels induktiv gekoppelter Plasmaemission (ICP) bestimmten Rutheniumgehalt der wässrigen Lösung unter Bezug auf das eingesetzte Gemisch).

### Beispiel 2:

25 g Kaliumhydroxid wurden in einem Tiegel bei 570 °C aufgeschmolzen. Unter Rühren wurde ein Gemisch aus 10 g Ru-Pulver und 0,5 g RuO₂-Pulver portionsweise unter Rühren eingetragen. Anschließend wurde bei 570 °C für 5 Stunden weiter gerührt und dann abkühlen gelassen. Nach Erkalten der Schmelze wurde der Rückstand in 150 ml Wasser gelöst und anschließend filtriert. Der Löserückstand wurde getrocknet und ausgewogen (0,01 g). Die wässrige Lösung wurde analysiert.

Die Wiederfindungsrate für das Ruthenium betrug 99 % (errechnet aus dem mittels ICP bestimmten Rutheniumgehalt der wässrigen Lösung unter Bezug auf das eingesetzte Gemisch).

## Patentansprüche

1. Verfahren zum Aufschluss eines in Form von Feststoffpartikeln vorliegenden Gemischs bestehend aus:
(A) 0,05 bis 99 Gew.-% metallischen Rutheniums,
(B) 0 bis 50 Gew.-% mindestens eines von Ruthenium verschiedenen, in Elementform vorliegenden Elements ausgewählt aus der Gruppe der Elemente der Ordnungszahlen 13, 21-30, 39-42, 45-52 und 72-83,
(C) 0 bis 99 Gew.-% Rutheniumoxid,
(D) 0 bis 70 Gew.-% mindestens eines von Rutheniumoxid verschiedenen festen Elementoxids,
(E) 0 bis 30 Gew.-% mindestens einer von (A) bis (D) verschiedenen anorganischen Substanz, und
(F) 0 bis 3 Gew.-% mindestens einer organischen Substanz,
wobei die Summe der Gew.-% der Bestandteile (A) bis (F) 100 Gew.-% und der Rutheniumgehalt des Gemischs 2 bis 99 Gew.-% beträgt, und
wobei das Verfahren die Schritte umfasst:
(1) gegebenenfalls Vermengen des Gemischs mit Alkalicarbonat unter Bildung eines Gemenges,
(2) alkalisch oxidierendes Aufschließen des Gemischs oder des im optionalen Schritt (1) gebildeten Gemenges in geschmolzenem Kaliumhydroxid unter Verwendung von Luft als Oxidationsmittel und ohne Verwendung von Nitrat, und
(3) Abkühlen des in Schritt (2) gebildeten Aufschlussmaterials auf eine Temperatur unterhalb seiner Erstarrungstemperatur.

2. Verfahren nach Anspruch 1, wobei Schritt (1) mit einer Menge von 20 bis 1000 kg des Gemischs verwirklicht wird.

3. Verfahren nach Anspruch 1 oder 2, wobei Schritt (1) mit einem Gewichtsverhältnis von 1 Gewichtsteil Gemisch : 0,05 bis 0,5 Gewichtsteilen Alkalicarbonat verwirklicht wird.

4. Verfahren nach einem der vorhergehenden Ansprüche, wobei es sich bei dem aufzuschließenden Gemisch um ein Erzkonzentrat oder um ein Gemisch mehrerer verschiedener Erzkonzentrate aus der Erzaufbereitung und/oder um einen Rückstand oder ein Gemisch mehrerer verschiedener jeweils Ruthenium enthaltender Rückstände aus der Edelmetallaufbereitung handelt.

5. Verfahren nach einem der vorhergehenden Ansprüche, wobei sich das aufzuschließende Gemisch durch mittels Laserbeugung bestimmte Teilchengrößen D10 im Bereich von 0,5-1 µm und D50 im Bereich von 2-10 µm seiner es ausmachenden Feststoffpartikel auszeichnet.

6. Verfahren nach einem der vorhergehenden Ansprüche, wobei auch kein von Nitrat verschiedenes Oxidationsmittel verwendet wird.

7. Verfahren nach einem der vorhergehenden Ansprüche, wobei das in Schritt (2) zur Anwendung kommende Gewichtsverhältnis von aufzuschließendem Gemisch und geschmolzenem Kaliumhydroxid 1 : 2 bis 1 : 5 beträgt.

8. Verfahren nach einem der vorhergehenden Ansprüche, wobei in Schritt (2) neben dem aufzuschließenden Gemisch respektive dem Gemenge, Kaliumhydroxid und Luft keine weiteren Substanzen verwendet werden.

9. Verfahren nach einem der vorhergehenden Ansprüche, wobei Schritt (2) die Zugabe des aufzuschließenden Gemischs respektive des Gemenges in eine zuvor hergestellte Kaliumhydroxidschmelze umfasst.

10. Verfahren nach Anspruch 9, wobei die Kaliumhydroxidschmelze während der Zugabe eine Temperatur im Bereich von 400 bis 800 °C aufweist.

11. Verfahren nach Anspruch 9 oder 10, wobei das nach beendeter Zugabe entstandene geschmolzene Material weiter durchmischt wird.

12. Verfahren nach einem der vorhergehenden Ansprüche, wobei sich nach Beendigung von Schritt (3) ein Schritt (4) umfassend das Lösen des abgekühlten und erstarrten Aufschlussmaterials in Wasser anschließt.
